# EUROPEAN PATENT APPLICATION

(11) **EP 2 618 596 A1**
(43) Date of publication of application: **24.07.2013**
(21) Application number: 12290026.9
(22) Date of filing: 23.01.2012
(51) Int. Cl.: H04W 4/04, H04W 4/02

(54) **Method, network entity and communication system for increasing traffic security**

(71) Applicant: Alcatel Lucent, 75007 Paris (FR)
(72) Inventor: Doetsch, Uwe, 74392 Freundenthal (DE); Wild, Thorsten, 70435 Stuttgart (DE)
(74) Representative: Michalski Hüttermann & Partner Patentanwälte

(57) **Abstract**

The present invention relates to a network entity (14) for increasing traffic security for use in a wireless communication network (21), comprising a receiving unit (15) adapted to receive via the wireless communication network (21) information from a first mobile communication device (1), a processing unit (16) adapted to process the information received from the first mobile communication device (1) for detecting an endangered traffic situation, and a transmission unit (17) adapted to transmit an alerting message via the wireless communication network (21) to at least one second mobile communication device (2) in vicinity of the first mobile communication device (1) upon detection of an endangered traffic situation. The present invention further relates to a method for increasing traffic security using a communication system (20) comprising a wireless communication network (21), a first mobile communication device (1) for providing information, and at least one second mobile communication device (2) in vicinity of the first mobile communication device (1), and such a communication system (20).

## Description

The present invention relates to the area of traffic security, particularly to the area of detection of endangered traffic situations.

Nowadays, most people own mobile communication devices like cell phones, smartphones, mobile computers or others, and carry at least some of these devices with them almost all the time. These devices are frequently not switched off, and therefore remain continuously in communication connection with the wireless communication network. Hence, the mobile communication devices are registered in the wireless communication network, and data exchange from and/or to the cell phones can be established easily and rapidly, assuming that resources in the wireless communication network are available. Typical mobile communication devices comprise at least one input device, e.g. a keypad or a microphone, suitable for data input into the mobile communication device, and at least one output device, e.g. a speaker or a display, and are enabled to exchange data with the wireless communication network.

Wireless communication networks like GSM, UMTS, LTE, or others are nowadays available at almost any place around the world. These wireless communication networks provide an infrastructure, which can be used by mobile communication devices suitable for use in these wireless communication networks to transmit and receive any kind of data, nowadays primarily voice data. The communication networks can be used at any time, including traffic situations, where users frequently can even actively use their mobile communication devices, e.g. their cell phones.

The term traffic situation refers to any kind of situation, where multiple traffic participants are present in a certain area and at least one of them is moving, which occurs in many situations. Such traffic situations include a person waiting at a bus stop, pedestrians walking along the road, or a group of children playing next to the road, where an interaction with other traffic participants may occur at any time. Traffic situations also refer to situations where traffic participants are using means of transport, e.g. a car or a bicycle, and even to use of self-driven vehicles. In such traffic situations, the traffic participant can be in an endangered situation without taking notice, e.g. when a car is approaching a location of a traffic participant, and the car is not yet visible or audible. Traffic participants comprise persons, persons in combination with a means of transport and a self-driven means of transport.

It is an object of the present invention to provide a method, a network entity, and a communication system for increasing traffic security, which can be easily used and applied, and allow alerting traffic participants in case of endangered traffic situations rapidly and reliably.

This object is achieved by the independent claims. Advantageous embodiments are given in the dependent claims.

In particular, the present invention provides a network entity for increasing traffic security for use in a wireless communication network, comprising a receiving unit adapted to receive via the wireless communication network information from a first mobile communication device, a processing unit adapted to process the information received from the first mobile communication device for detecting an endangered traffic situation, and a transmission unit adapted to transmit an alerting message via the wireless communication network to at least one second mobile communication device in vicinity of the first mobile communication device upon detection of an endangered traffic situation.

The present invention also provides a method for increasing traffic security by use of a wireless communication network, comprising the steps of receiving information from a first mobile communication device via the wireless communication network, processing the information received from the first mobile communication device for detecting an endangered traffic situation, and transmitting an alerting message via the wireless communication network to the at least one second mobile communication device in vicinity of the first mobile communication device upon detection of an endangered traffic situation.

The present invention provides a further method for increasing traffic security using a communication system comprising a wireless communication network, a first mobile communication device for providing information, and at least one second mobile communication device in vicinity of the first mobile communication device, comprising the steps of processing the information from the first mobile communication device to detect an endangered traffic situation, transmitting an alerting message via the wireless communication network to the at least one second mobile communication device in vicinity of the first mobile communication device upon detection of an endangered traffic situation, and generating a user alert on the at least one second mobile communication device upon reception of the alerting message.

Furthermore, the present invention provides a communication system comprising a wireless communication network, a first mobile communication device, and at least one second mobile communication device, whereby the communication system is adapted to perform the above method.

Basic idea of the invention is to automatically detect an endangered traffic situation by use of the information from the first mobile communication device and to automatically generate the user alert at the at least one second mobile communication device. The endangered traffic situation can be any traffic situation with an increased probability of accidents. Generally speaking, endangered traffic situations can occur in case some of the participants are not aware of others and/or cannot react on other traffic participants in an appropriate way. Accordingly, the detection of an endangered traffic situation comprises detection of such a particular endangered traffic situation, e.g. when an accident between traffic participants using the first mobile communication device and the at least one second mobile communication device is automatically predictable with a certain probability. Upon detection of an endangered traffic situation, the traffic participant in vicinity to the first mobile communication device, who is user of the at least one second mobile communication device, can be alerted by a sending an alerting message via the wireless communication network to generate a user alert on the second mobile communication device, so that the traffic participant using the at least one second mobile communication device can take care on the endangered traffic situation, and in particular on the traffic participant using the first mobile communication device. Hence, the endangered traffic situation can be resolved.

The processing of the information can be done within the network entity, which does not underlie limitations in respect to computational power, as may be the case for the first mobile communication device.

The terms first and second mobile communication device refer to essentially any kind of a mobile communication device, particularly mobile phones. The difference between the first and the second mobile communication device is preferably a logical difference based on whether the information for detection of the endangered traffic situation is generated, or the user alert is generated. Accordingly, any mobile communication device can act at the same time as first and second mobile communication device. The second mobile communication device may be a mobile communication device associated to a means of transport, e.g. a car, which is either built-in or connected via cable or a wireless communication link, e.g. via Bluetooth thereto. Accordingly, the second mobile communication device may provide the alert via a warning interface to a dashboard or an in-car multi-media device of the car. When the at least one second communication device is in communication connection with the wireless communication network, i.e. the second communication device is registered in the wireless communication network, the alerting message can easily be sent to the at least one second mobile communication device. Time consuming prior establishment of a communication connection or registration of the at least on second mobile communication device for purpose of transmitting the alerting message is not required. With more than one second mobile communication device present in the vicinity of the first mobile communication device, the alerting message can be sent to multiple or all second mobile communication devices simultaneously.

This way, traffic security can be increased, since almost any participant in the traffic situation is equipped with a mobile communication device, so that no additional devices are required for detecting the endangered traffic situation and/or for sending the alerting message to the second mobile communication device for generating a user alert. Wireless communication networks are widely available almost anywhere around the world.

For processing the information and generating the user alert, software applications can be installed on available mobile communication devices to convert them into first and second mobile communication devices. Particular mobile communication devices do not have to be provided.

At the first mobile communication device, any suitable input device can provide information, which is processed to detect an endangered traffic situation.

Vicinity can depend on the traffic situation or can be defined independently, e.g. by the first mobile communication device and the second mobile communication device being located in the same cell of the mobile communication network.

In a preferred embodiment the processing unit is adapted to process the information from the first mobile communication device for performing a classification of the first mobile communication device. For example, children or elderly people can generally be considered to be in an endangered traffic situation, since they may not react in traffic situations as expected by other traffic participants, thereby endangering themselves and/or other traffic participants. Children, who are playing, are usually not aware of cars passing by on a road next to them, so that they will likely enter or cross the road without taking prior notice of these cars. Similarly, persons having reduced vision will not recognize endangered situations in advance. Furthermore, traffic participants may be physically handicapped, so that even after recognizing an endangered traffic situation they will not be able to leave this situation appropriately. Accordingly, the detection of an endangered situation can comprise classifying a traffic participant using the first mobile communication device as a general source of endangered traffic situations based on the information of the first mobile communication device. In a preferred embodiment the processing unit comprises at least one neural network and/or a hidden Markov model adapted to process information from the first mobile communication device. Classification tasks can be easily handled by neural networks. Preferably, a multilayer perceptron is used to receive the information from the first mobile communication device and to provide as output classification probabilities, which can be trained from a database using for example a back propagation algorithm to detect endangered traffic situations. The neural networks can process simultaneously different kinds of information from the first mobile communication device, or just a single kind of information. Availability of kinds of information depends on the first mobile communication device.

In a preferred embodiment the information from the first mobile communication device comprises audio information extracted from a microphone as input device. For example, traffic sound may indicate an endangered situation, e.g. sound of a braking car. Also, sound of playing children can be used to classify a traffic participant carrying the first mobile communication device as a playing child. Similarly, a user of a first mobile communication device, who is having a communication, either person-to-person or via the first mobile communication device, is also likely to focus on the communication and to be rather careless about traffic situations.

In a preferred embodiment the information from the first mobile communication device comprises mobility information extracted by a GPS-receiver and/or an acceleration sensor as input device. Mobility information refers to any kind of information regarding movement of the first mobile communication device and therefore regarding movement of a traffic participant carrying the first mobile communication device. Information regarding movement comprises speed and direction of a movement and/or strength and direction of an acceleration, which can be extracted directly or derived from position information. For example playing children frequently run around with a movement pattern frequently changing speed and direction, suitable for classifying them accordingly. In contrast, an adult pedestrian is generally proceeding in a certain direction with a relatively constant velocity, as a different pattern. Such typical movement profiles can be automatically recognized. In contrast, a person who is not moving will most probably not cause an endangered traffic situation. Also detection of acceleration that will conduct a traffic participant into a particular danger can be detected.

In a preferred embodiment the information from the first mobile communication device comprises position information of the first mobile communication device. Children, who are playing on a playground far away from a road, cannot cause endangered traffic situations, since they are in a separate area. On the other hand, a child, who is approaching a road with high velocity, is likely to enter the road causing an endangered traffic situation. The other way round, a car, which is moving in a pedestrian area, can also be detected as a cause of an endangered traffic situation. Any kind of a violation of traffic code, which can be detected by evaluating position information, can be considered as an endangered traffic situation. Also an unexpected acceleration detected by the acceleration sensor can indicate such an endangered traffic situation. Even though usually a person who is not moving does not cause an endangered traffic situation, this can be the case when a pedestrian is not moving on the middle of a road.

In a preferred embodiment the information from the first mobile communication device comprises user information entered via a user interface as input device. This refers to any kind of information in respect to the person using the first mobile communication device. E.g. different buttons can be implemented as user interface for indicating that the owner of the first mobile communication device is for example a child, a bicycle rider or a driver of an emergency vehicle like a police car or an ambulance, thereby enabling a self-classification of the traffic participant. Also, the user interface can comprise an emergency button, indicating e.g. a temporary medical emergency of the respective traffic participant, so that his current participation in the particular traffic situation causes an endangered traffic situation.

The information processed for detecting an endangered traffic situation may be unprocessed or pre-processing information, which may already contain a dimensionality reduction. It may be information relevant for detection of an endangered traffic situation, which is carved from the information as gathered by the input devices. The pre-processed information may be compressed information reduced in size.

In a preferred embodiment the receiving unit is adapted to receive mobility information of the first mobile communication device from the wireless communication network, and the processing unit is adapted to additionally process the mobility information of the first mobile communication device for detecting an endangered traffic situation. Mobility information of the first mobile communication may comprise position and/or movement information as described above. With the wireless communication network providing this information, it can be processed for detecting an endangered traffic situation, although the first mobile communication device does not provide this information. Mobility information can be provided e.g. by means of assisted GPS (A-GPS) or triangulation techniques.

In a preferred embodiment the receiving unit is adapted to receive mobility information of the at least one second mobile communication device via the wireless communication network, and the processing unit is adapted to additionally process mobility information of the at least one second mobile communication device for detecting an endangered traffic situation. The mobility information may be provided from the second mobile communication device itself or the mobile communication network. The principles described above in respect to processing mobility information apply. Preferably, mobility information of the first and the second mobile communication device are both processed, so that particular endangered traffic situations may be detected.

In a preferred embodiment the transmission unit is adapted to transmit the alerting message as a broadcast message to second mobile communication devices in vicinity to the first mobile communication device via the wireless communication network. The broadcast message allows alerting multiple traffic participants simultaneously and therefore in an efficient way.

In a preferred embodiment the transmission unit is adapted to transmit the alerting message containing mobility information of the first mobile communication device. With the mobility information, the second mobile communication device can evaluate the alerting message received from the base station to decide whether a user alert has to be generated or not. For example, in case of a second mobile communication device used by car driver, an endangered traffic situation can be irrelevant, when the car is not moving. Second mobile communication devices close by the first mobile communication device, so that the detected endangered traffic situation is relevant for them, thereby defining vicinity, may be detected, so that the alerting message can be transmitted to these second mobile communication devices.

In a preferred embodiment the wireless communication network is arranged in a cell structure with one base station serving mobile communication devices located in a cell, and the step of transmitting an alerting message via the wireless communication network to the at least one second mobile communication device in vicinity of the first mobile communication device comprises transmitting the alerting message to at least one second mobile communication device served by the same base station as the first mobile communication device. Accordingly, the serving base station is indicating vicinity between the first and the second mobile communication device.

In a preferred embodiment the step of evaluating information from the first mobile communication device to detect an endangered traffic situation comprises evaluating the information within the first mobile communication device, and the step of transmitting an alerting message via the wireless communication network to the at least one second mobile communication device comprises sending the alerting message from the first mobile communication device. Once the endangered traffic situation has been detected, the alerting message can be transmitted rapidly from the first mobile communication device to the wireless communication network, so that a time delay due to transfer of the information to the network does not occur and the detection of the endangered traffic situation is independent from resources of the wireless communication network. The information can be processed by an application running on the first mobile communication device. Since data transmission in wireless communication networks usually generates costs to the user, this is a cost-sensitive way for alerting second mobile communication devices.

In a preferred embodiment the step of processing information from the first mobile communication device comprises evaluating information within the first mobile communication device and transmitting an evaluation result to an alerting device of the wireless communication network, and the step of transmitting an alerting message via the wireless communication network to the at least one second mobile communication device comprises sending the alerting message from the alerting device. Also the network entity as described above can be used as alerting device. The principles of the processing unit of the network entity can be applied to a processing unit of the first mobile communication devices for performing a detection of an endangered traffic situation within the first mobile communication device.

In a preferred embodiment the communication system additionally comprises a network entity as described above, whereby the communication system is adapted to perform the above described method for use in the network entity. The network entity can be a component of the wireless communication network or be connected thereto.

Although some feature have been described with reference to an apparatus, it is obvious for a person skilled in the art that these feature can be similarly applied to the above method, and vice-versa.

Some embodiments of apparatus and/or methods in accordance with embodiments of the present invention are now described, by way of example only, and with reference to the accompanying drawings, in which:
- Fig. 1: shows a schematic view a communication system for increasing traffic security according to a first embodiment of the invention, and
- Fig. 2: shows a detailed schematic view illustrating a first mobile communication device of the communication system of Fig. 1,
- Fig. 3: shows a detailed schematic view illustrating a network entity according to the first embodiment,
- Fig. 4: shows a schematic view illustrating a communication system for increasing traffic security by detection of an endangered traffic situation according to a second embodiment, and
- Fig. 5: shows a detailed schematic view illustrating a first mobile communication device of the communication system of Fig. 4,

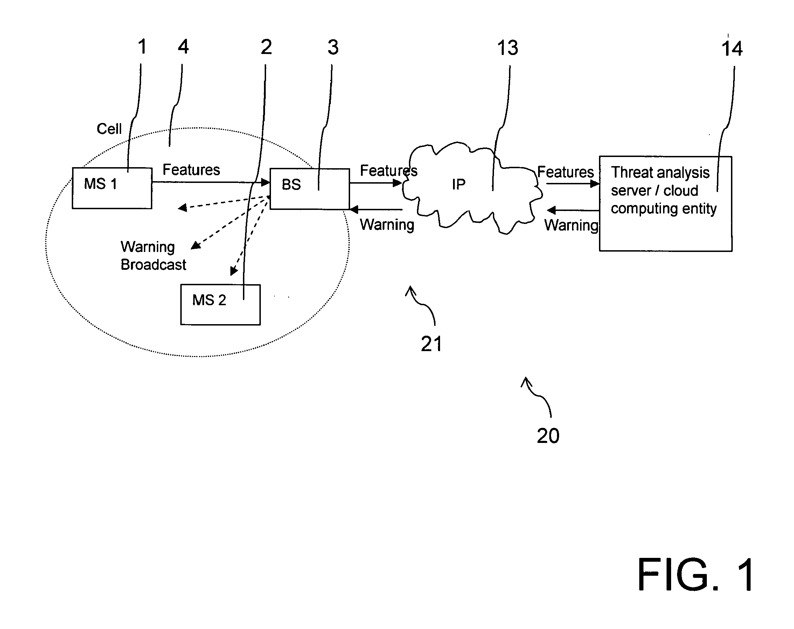

A first embodiment will be described with respect to Figures 1 to 3.

Fig. 1 schematically shows a communication system 20 comprising a wireless communication network 21, a first mobile communication device 1, which is denoted MS1, and at least one second mobile communication device 2, which is denoted MS2. The wireless communication network 21 comprises a base station 3, also denoted as BS, defining a cell 4 of the wireless communication network 20, and a network connection 13, which is indicated by the cloud denoted IP. The Mobile communication devices 1, 2 are served by base station 3 of cell 4. Although only one second mobile communication device 2 is shown in Fig. 1 by way of example, multiple second mobile communication devices 2 can be located within the cell 4. The communication system 20 according to this embodiment is based on the UMTS or LTE-standard.

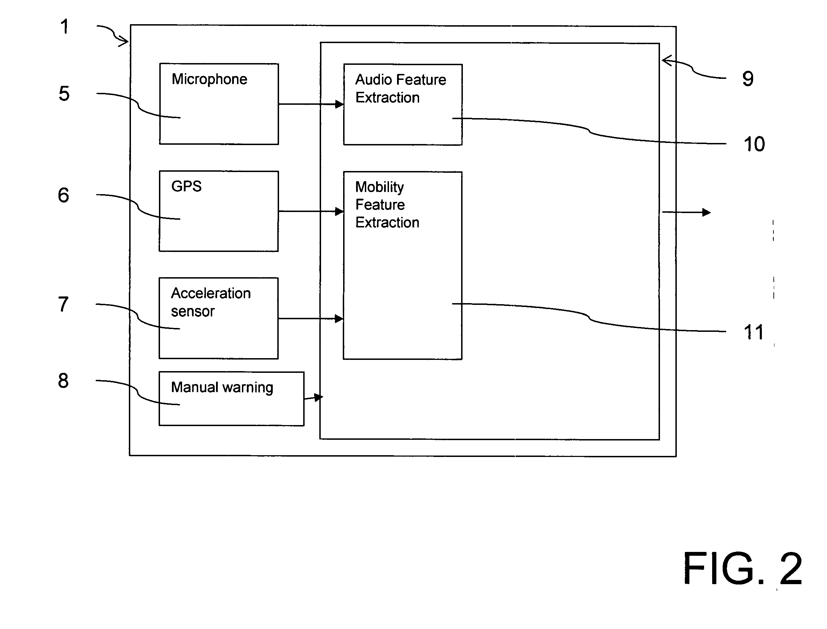

As best shown in Figure 2, the first mobile communication device 1 comprises a microphone 5, a GPS-receiver 6, an acceleration sensor 7, and a manual warning button 8 as input devices. The manual warning button 8 in this embodiment is a button indicating whether a person, i.e. a traffic participant, carrying the first mobile communication device 1 is a child or not.

Information extracted from these input devices 5, 6, 7, 8 is passed to pre-processing unit 9. The pre-processing unit 9 comprises an audio feature extraction unit 10 and a mobility feature extraction unit 11, which are logical units within the pre-processing unit 9. The audio feature extraction unit 10 receives audio information from the microphone 5, and the mobility feature extraction unit 11 receives location information from the GPS receiver 6 and acceleration information from the acceleration sensor 7, and combines the provided information, which is partly redundant, to reliably provide information regarding position, velocity and acceleration of the first mobile communication device 1.

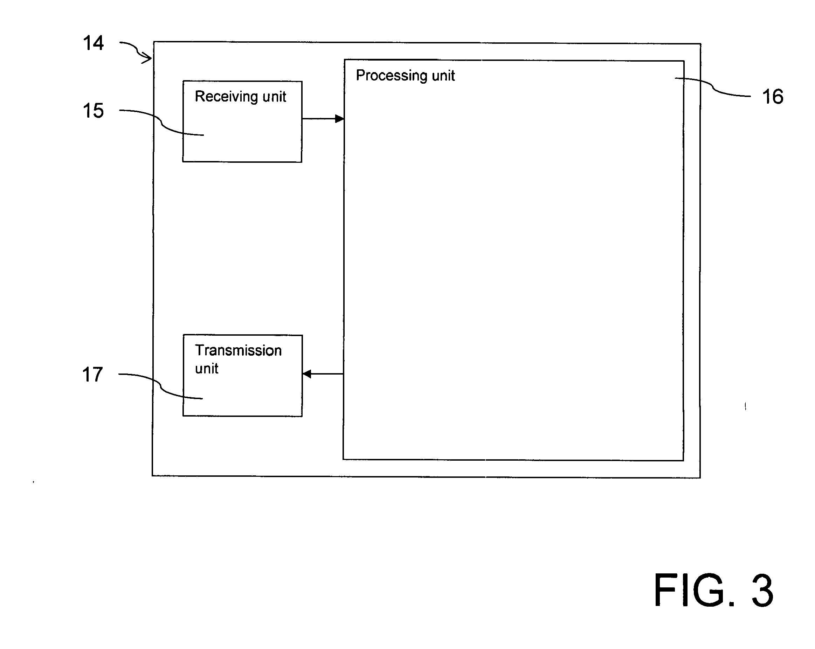

The information from the audio feature extraction unit 10 and the mobility feature extraction unit 11 is combined together with the information from the manual warning button 8 in the pre-processing unit 9, which performs a pre-processing of the information, already containing a dimensionality reduction of the data, carving out relevant information for further processing, and data compression. This pre-processed information is transferred from the first mobile communication device 1 via the wireless communication network 21 to a network entity 14, which is shown in detail in Fig. 3. The network entity 14 comprises a receiving unit 15, which receives the information via the base station 3 and the network connection 13.

The wireless communication network 21 in this embodiment performs an independent determination of the position of the first mobile communication device 1. The wireless communication network 21 performs the detection using triangulation and/or assisted GPS (A-GPS). This is particularly important for first mobile communication devices 1 not having a GPS-receiver 6. For first mobile communication devices 1 having a GPS-receiver 6, the detection of the location of the first mobile communication device 1 by the wireless communication network 21 provides redundant information.

The network entity 14 further comprises a processing unit 16, which is implemented as a neural network combining a multi-layer perceptron with a back-propagation algorithm. Accordingly, the processing unit 16 processes audio information from the microphone 5, mobility information from the first mobile communication device 1 based on its GPS-receiver 6 and acceleration sensor 7, and the information from the manual warning button 8, and the mobility information of the first mobile communication device 1 from the wireless communication network 21. The processing unit 16 comprises a neural network and a hidden Markov model adapted to process the information from the first mobile communication device 1 to detect an endangered traffic situation by way of classification.

Upon detection of an endangered traffic situation the network entity 14 transmits from its transmission unit 17 an alerting message via the wireless communication network 21 to multiple second mobile communication devices 2, as indicated in Fig. 1. The alerting message in this embodiment contains mobility information of the first mobile communication device 1, particularly location information and movement information, for further evaluation by the second mobile communication device 2.

The alerting message is sent to the base station 3 of the cell 4 serving the first mobile communication device 1. Since the alerting message is sent to the base station 3 serving the first mobile communication device 1, the respective base station 3 is supposed to be the closest base station 3 and to cover the vicinity of the first mobile communication device 1. As indicated in Fig. 1, the base station 3 sends the alerting message to all second mobile communication devices 2 within the cell 4 as a broadcast message.

The second mobile communication device 2, which is not shown in detail, comprises a GPS-receiver for providing mobility information, i.e. location and movement information. The second mobile communication device 2 evaluates its own mobility information and generates the user alert under consideration of the received alerting message as a general user alert, when the distance between the first and second mobile communication devices 1, 2 is below a given threshold. Accordingly, a user of the second mobile communication device 2 can react upon the user alert and participate in resolving the endangered traffic situation.

In a modified embodiment, only part of the information from the first mobile communication device 1, i.e. information from the input devices 5, 6, 7, 8, is transmitted from the first mobile communication device 1 to the network entity 14. The remaining part of the extracted information is processed within the first mobile communication device 1, and the evaluation result is transmitted via the wireless communication network 21 to the network entity 14.

In a further alternative embodiment, the network entity 14 receives at its receiving unit 15 mobility information from second mobile communication devices 2 via the wireless communication network 21. The processing unit 16 additionally processes the mobility information of the second mobile communication devices 2 for detecting an endangered traffic situation. Accordingly, the network entity 14 identifies a set of second mobile communication devices 2, which are involved in the endangered situation due to their position relative to the first mobile communication device 1, and transmits the alerting request to these second mobile communication devices 2 via the wireless communication network 21.

In a further modified embodiment, the network entity 14 is an integral part of the wireless communication network 2.

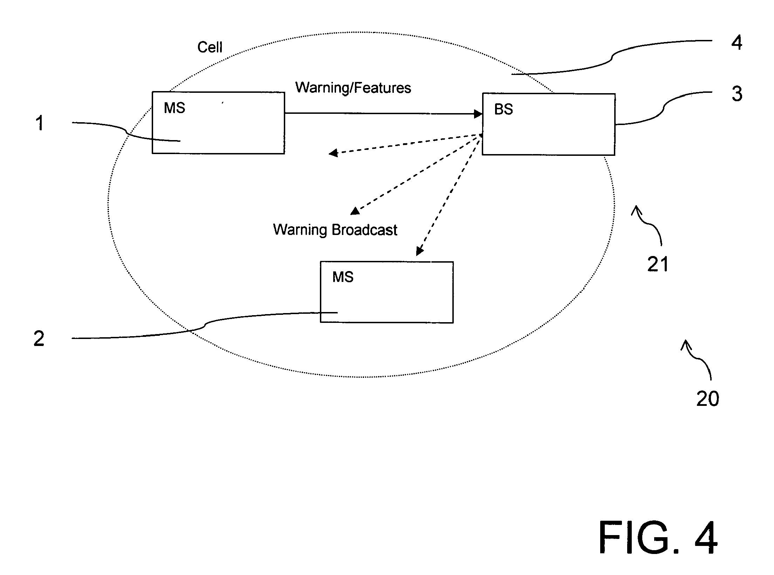

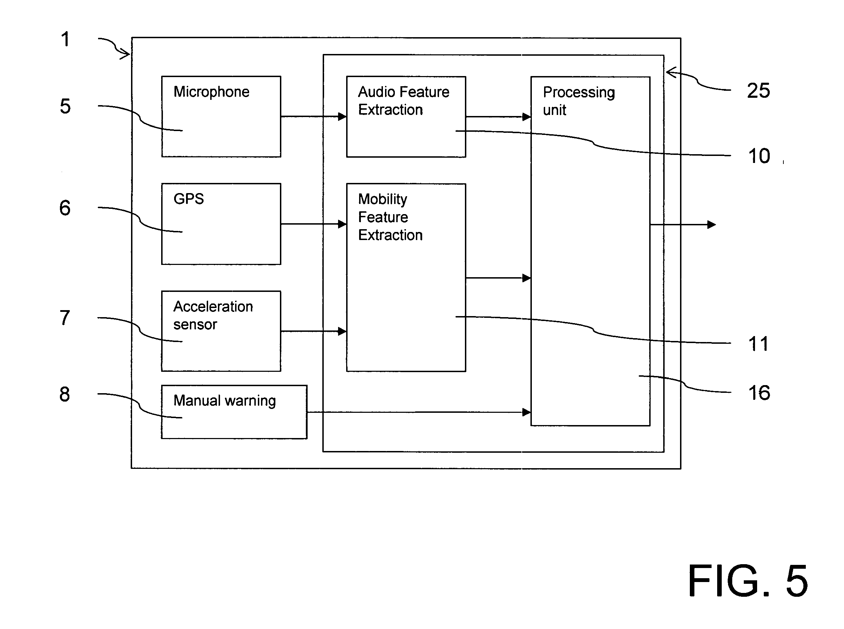

A second embodiment of a communication system 20 is shown with reference to Figures 4 and 5. Like components of the communication system 20 are denoted with same reference numerals.

As shown in Fig. 4, the communication system 20 comprises a wireless communication network 21, from which only a base station 3 is shown, a first mobile communication device 1 and at least one second mobile communication device 2 in accordance with the first embodiment. The wireless communication network 21 in this embodiment is a network according to the GSM-standard.

In accordance with the first mobile communication device 1 of the first embodiment, the first mobile communication device 1 of the second embodiment, which is best seen in Fig. 5, comprises a microphone 5, a GPS receiver 6, an acceleration sensor 7 and a manual warning button 8 as input devices, which are identical to the afore-mentioned input devices 5, 6, 7, 8. The first mobile communication device 1 further comprises a processing and evaluation unit 25, which comprises an audio feature extraction unit 10 and a mobility feature extraction unit 11 in accordance with the first embodiment. The processing and evaluation unit 25 also comprises a processing unit 16 in accordance with the processing unit 16 of the network entity 14 of the first embodiment. Although located in the first mobile communication device 1, the implementation and behavior of the processing unit 16 is identical to the already described processing unit 16.

After the detection of the endangered traffic situation, the first mobile communication device 1 transmits an alerting message to the wireless communication network 21. In particular, the first mobile communication device 1 transmits the alerting message to base station 3 of its cell 4. The respective base station 3 is assumed by definition to be the closest base station 3, since it serves the first mobile communication device 1, although other base stations 3 may be located geometrically closer to the first mobile communication device 1, depending e.g. on communication conditions and characteristics of the wireless communication network 21. Base station 3 is further assumed to cover the vicinity thereof, since second mobile communication devices 2 close by the first mobile communication device 1 are probably served by the same base station 3. The alerting message in this embodiment contains mobility information of the first mobile communication device 1. As indicated in Fig. 4, the base station 3 sends the alerting message to all second mobile communication devices 2 within the cell 4 as a broadcast message.

As already described with reference to the first embodiment, a user alert at the second mobile communication device 2 is only generated under evaluation of its mobility information. The user alert is generated depending on whether the mobility information of the first and second mobile communication device 1, 2 indicates that the mobile communication devices 1, 2 will approximate each other closer than a predefined threshold.

In an alternative embodiment, the base station 3 comprises a not shown alerting unit, which receives an evaluation result for the detection of an endangered traffic situation from the first mobile communication device 1. The alerting unit then generates the alerting message and sends it to all second mobile communication devices 2 within the cell 4 as broadcast message.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. Network entity (14) for increasing traffic security for use in a wireless communication network (21), comprising
a receiving unit (15) adapted to receive via the wireless communication network (21) information from a first mobile communication device (1),
a processing unit (16) adapted to process the information received from the first mobile communication device (1) for detecting an endangered traffic situation, and
a transmission unit (17) adapted to transmit an alerting message via the wireless communication network (21) to at least one second mobile communication device (2) in vicinity of the first mobile communication device (1) upon detection of an endangered traffic situation.

2. Network entity (14) according to preceding claim 1, whereby
the processing unit (16) is adapted to process the information from the first mobile communication device (1) for performing a classification of the first mobile communication device (1).

3. Network entity (14) according to preceding claim 2, whereby
the processing unit (16) comprises at least one neural network and/or a hidden Markov model adapted to process information from the first mobile communication device (1).

4. Network entity (14) according to preceding claim 1, whereby
the receiving unit (15) is adapted to receive mobility information of the first mobile communication device (1) from the wireless communication network (21), and
the processing unit (16) is adapted to additionally process the mobility information of the first mobile communication device (1) for detecting an endangered traffic situation.

5. Network entity (14) according to preceding claim 1, whereby
the receiving unit (15) is adapted to receive mobility information of the at least one second mobile communication device (2) via the wireless communication network (21), and
the processing unit (16) is adapted to additionally process mobility information of the at least one second mobile communication device (2) for detecting an endangered traffic situation.

6. Network entity (14) according to preceding claim 1, whereby
the transmission unit (17) is adapted to transmit the alerting message as a broadcast message to second mobile communication devices (2) in vicinity to the first mobile communication device (1) via the wireless communication network (21).

7. Network entity (14) according to preceding claim 1, whereby
the transmission unit (17) is adapted to transmit the alerting message containing mobility information of the first mobile communication device (1).

8. Method for increasing traffic security by use of a wireless communication network (21), comprising the steps of
receiving information from a first mobile communication device (1) via the wireless communication network (21),
processing the information received from the first mobile communication device (1) for detecting an endangered traffic situation, and
transmitting an alerting message via the wireless communication network (21) to the at least one second mobile communication device (2) in vicinity of the first mobile communication device (1) upon detection of an endangered traffic situation.

9. Method for increasing traffic security using a communication system (20) comprising a wireless communication network (21), a first mobile communication device (1) for providing information, and at least one second mobile communication device (2) in vicinity of the first mobile communication device (1), comprising the steps of
processing the information from the first mobile communication device (1) to detect an endangered traffic situation,
transmitting an alerting message via the wireless communication network (21) to the at least one second mobile communication device (2) in vicinity of the first mobile communication device (1) upon detection of an endangered traffic situation, and
generating a user alert on the at least one second mobile communication device (2) upon reception of the alerting message.

10. Method according to preceding claim 9, whereby
the wireless communication network (21) is arranged in a cell structure with one base station (3) serving mobile communication devices (1, 2) located in a cell (4), and
the step of transmitting an alerting message via the wireless communication network (21) to the at least one second mobile communication device (2) in vicinity of the first mobile communication device (1) comprises transmitting the alerting message to at least one second mobile communication device (2) served by the same base station (3) as the first mobile communication device (1).

11. Method according to claim 9, whereby
the step of evaluating information from the first mobile communication device (1) to detect an endangered traffic situation comprises evaluating the information within the first mobile communication device (1), and
the step of transmitting an alerting message via the wireless communication network (21) to the at least one second mobile communication device (2) comprises sending the alerting message from the first mobile communication device (1).

12. Method according to claim 9, whereby
the step of processing information from the first mobile communication device (1) comprises evaluating information within the first mobile communication device (1) and transmitting an evaluation result to an alerting device of the wireless communication network (21), and
the step of transmitting an alerting message via the wireless communication network (21) to the at least one second mobile communication device (2) comprises sending the alerting message from the alerting device.

13. Method according to claim 9, additionally comprising the method of claim 8.

14. Communication system (20) comprising a wireless communication network (21),
a first mobile communication device (1), and
at least one second mobile communication device (2), whereby
the communication system (20) is adapted to perform the method according to any of preceding claims 9 to 12.

15. Communication system (20) according to claim 14, additionally comprising
a network entity (14) according to any of claims 1 to 8,
whereby
the communication system (20) is adapted to perform the method according to claim 13.
